Europäisches Patentamt

European Patent Office

Office européen des brevets

(11) EP 1 233 281 A1

(19)

(12) EUROPEAN PATENT APPLICATION

(43) Date of publication:
21.08.2002 Bulletin 2002/34

(51) Int Cl.$^7$: G01S 11/14, G01S 7/52,
G01S 15/74

(21) Application number: 00830402.4

(22) Date of filing: 14.02.2001

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **ISE Ingegneria dei Sistemi Elettronici S.r.l.**<br>**56010 Migliarino Pisano Vecchiano PI (IT)**<br><br>(72) Inventors:<br>• **Bianchi, Daniele**<br>**55100 Lucca LU (IT)** | • **Cremoncini, Andrea**<br>**19034 Ortonovo SP (IT)**<br>• **Di Bene, Giulio**<br>**56021 Cascina PI (IT)**<br>• **Lazzarotti, Marco**<br>**56121 Pisa PI (IT)**<br>• **Sani, Antonio**<br>**55048 Torre del Lago Puccini LU (IT)**<br><br>(74) Representative: **Celestino, Marco**<br>**ABM, Agenzia Brevetti & Marchi,**<br>**Viale Giovanni Pisano, 31**<br>**56123 Pisa (IT)** |

(54) **Apparatus and method for reducing the effects of a fluid motion on measuring distances by means of acoustic waves**

(57)     The distance ($D_{1,2}$) from the first to the second point (1,2) is computed by generating an acoustic pulse (14) at the first point (1), measuring the time (ti) taken by the acoustic pulse (14) to reach the second point (2) and comparing that time with the time ($t_0$) taken by a pulse to run on a known distance ($X_0$). Then the distance ($D_{2,1}$) from the second to the first point is computed by generating an acoustic pulse (2,1) at the second point (2), measuring the time ($t_2$) taken by the acoustic pulse (24) to reach the first point (1) and comparing that time ($t_2$) with the time ($t_0$) taken by a pulse to run on a known distance ($X_0$). Then, the average value of the distance ($D_{1,2}$) from the first to the second point (1,2) and of the distance ($D_{2,1}$) from the second to the first point (2,1) is calculated. That average value is assumed as the actual distance. The major part of the effects of the fluid motion is cancelled and in particular both effects of air temperature gradients in the environment and wind are satisfactorily compensated.

Fig. 6

EP 1 233 281 A1

**Description**

Field of the invention

The present invention relates to systems for measuring distances by means of acoustic waves and in particular it relates to a method for reducing the effects of a fluid motion on the measured distance.

The invention relates also to an apparatus that carries out this method.

Background of the invention

Without loss of generality, fluid is hereinafter referred to as air. However, the invention applies also to any kind of gas and liquid medium, such as water. Moreover acoustic waves are hereinafter referred to as air pressure pulses, regardless of their shape and harmonic content, that can be both sonic and/or ultrasonic.

It is well known that the distance between two points can be determined by measuring the time of flight of acoustic waves emitted in correspondence of the first point and received at the second.

Distance measuring devices are known, as described in GB 2102952, capable of improving the accuracy in the presence of disturbing signals owing to noise or objects in movement.

Acoustic distance measurement, however, even in the absence of disturbing signals, is affected also by the fluid motion, in particular air motion.

In the case of air, its motion is mainly due to two effects: 1) air temperature gradients in the environment and, 2) wind.

In particular, the propagation of pulses in the air is disturbed by air motion because the time of flight is slightly different from the theoretic value. Therefore, the estimated distance is different from the actual one. In other words, there is a poor precision of the measurement and a repeatability requirement would not be fulfilled.

An improvement to the overall precision can be obtained by mediating or integrating repeated measurements, but this can only compensate for the effect 1). Moreover much more time is required for obtaining the results.

This means that, according to the prior art, the precision of the measurement cannot be considerably improved in a windy environment.

Summary of the Invention

It is one object of the present invention to provide a method for measuring distances using acoustic waves in a fluid, wherein the major part of the effects of the fluid motion is cancelled and in particular both effects 1) and 2) above cited are satisfactorily compensated.

These objects are achieved by the method according to the present invention, whose characteristic is that the average value of the distances measured in two opposite directions is calculated.

This way the disturbances of the air longitudinal motion are eliminated, whereas the effect of the transversal motion still remains. On the other hand the air transversal component causes a minor disturbance in the measurement, as will be shown below.

In both cases the effects of the longitudinal turbulence of air is substantially cancelled.

According to another aspect of the invention, an apparatus for reducing the effects of air motion on measuring distances between two points comprises a first and a second transducer, to be located at said points respectively, each transducer being capable of acting alternatively as a transmitter and as a receiver, each transducer comprising:

- means for triggering the acoustic pulse starting from each transducer when it operates as transmitter;
- means for detecting the acoustic pulse coming from the other transducer;
- means for counting the time of flight of each acoustic pulse from when it is triggered at one transducer to when it is detected at the other transducer;
- means for computing the distance from the first transducer to the second transducer and from the second transducer to the first transducer,
- means for computing an average value of the distance from the first to the second transducer and the distance from the second to the first transducer.

Brief description of the drawings

Further characteristics and/or the advantages of the method and of the apparatus, according to the present invention, for reducing the effects of air motion on measuring distances by means of acoustic waves, will be made clearer with the following description of an embodiment thereof, exemplifying but not limitative, with reference to the attached drawings wherein:

- figure 1 shows a diagram of measurement of the distance between two points 1 and 2 without disturbances;
- figure 2 shows a diagram of measurement of the distance between two points 1 and 2 in the presence of longitudinal air motion;
- figure 3 shows a diagram of measurement of the distance between two points 1 and 2 in the presence of transversal air motion;
- Figures 4 and 5 show the effect on a distance measurement in presence of transversal wind and of longitudinal wind, respectively;
- Figure 6 shows a block diagram of an apparatus for carrying out a distance measurement according to the invention;
- Fig. 7 shows a diagram with the results of the measurements in the absence of wind, with only small air perturbations or air turbulence;
- Fig. 8 shows a diagram with the results of the measurements in the presence of wind both longitudinal and transversal component.

Description of the preferred embodiments

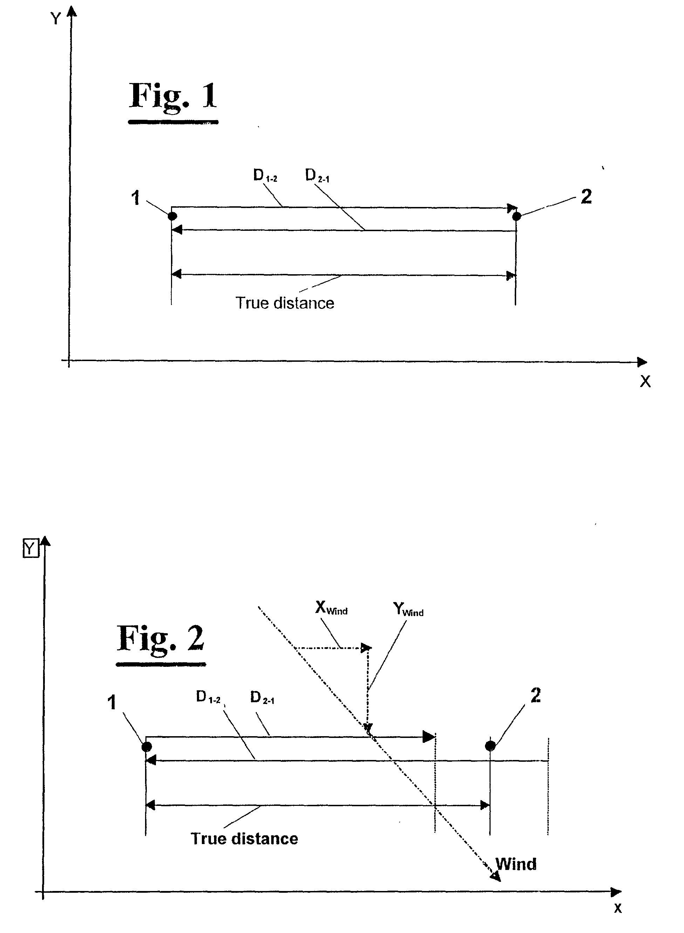

As known, when computing the distance $D_{1-2}$ between two points 1 and 2, as shown in Fig. 1, an acoustic pulse, either sonic or ultrasonic, can be sent from a transducer located at point 1, and received by a transducer located at point 2. The time of flight $t_1$ of the pulse is measured, and then compared with the time of flight $t_0$ of one pulse running to a known distance $X_0$. The measured distance will be given by the following equation:

$$D_{1-2} = X_0 * t_1/t_0$$

According to the invention, this distance is measured twice, but the latter in the opposite direction $D_{2-1}$ than the former. When computing the distance in the opposite direction, i.e. from point 2 to point 1, the measured distance $D_{2-1}$ will be given by the following equation:

$$D_{2-1} = X_0 * t_2/t_0$$

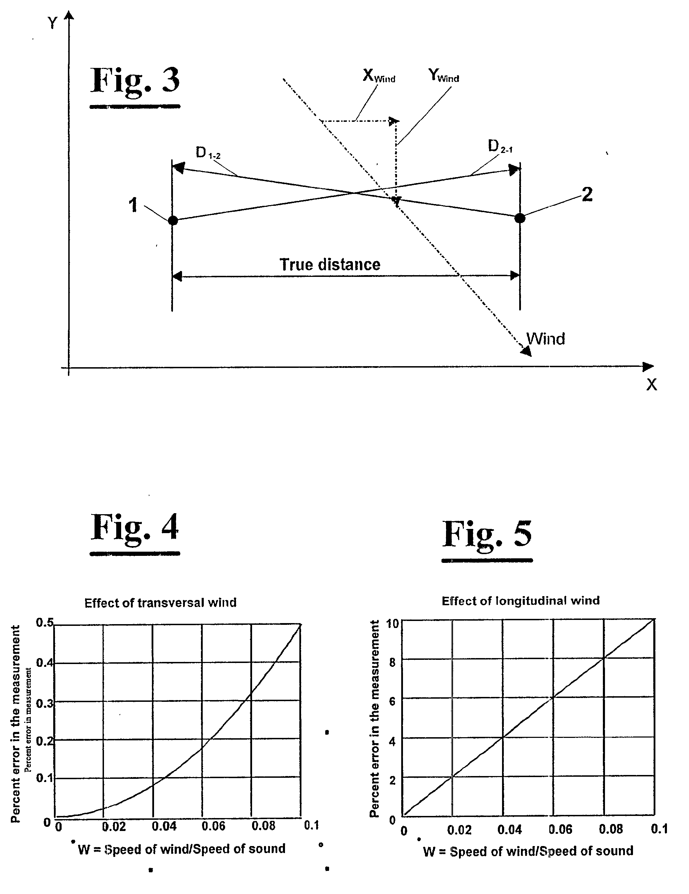

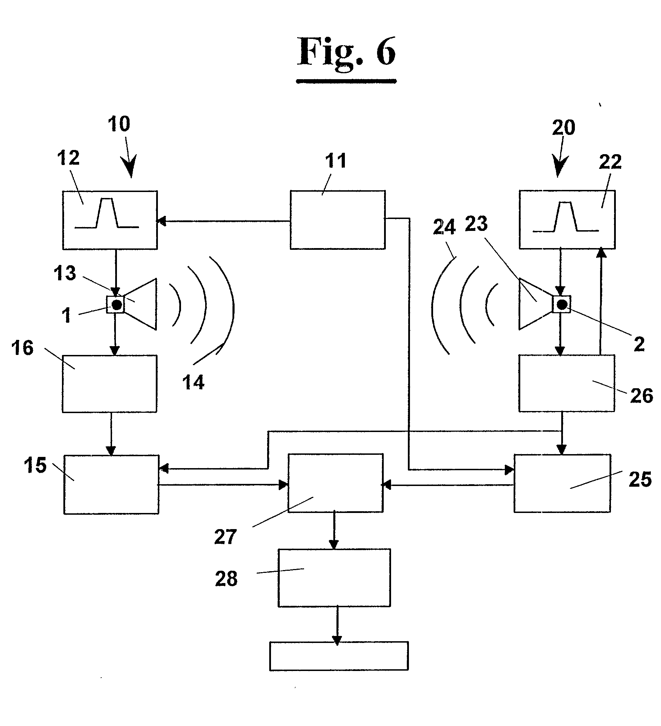

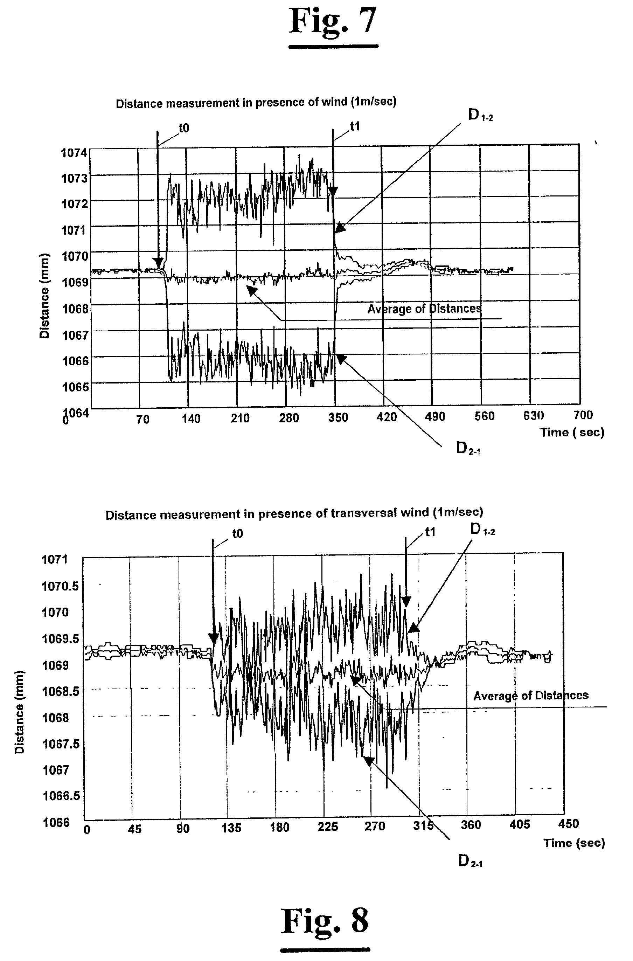

As shown in fig. 1, in the absence of air motion $t_1 = t_2$, and
$D_{1-2} = D_{2-1}$ = actual distance.
Apart from this theoretical case, the air moves in a generally unpredictable way. Fig. 2 shows a simplified case, when a constant flow of air exists, with X and Y components, respectively longitudinal and transversal. The effects of X component is shown by Fig. 2 itself, whereas Fig. 3 shows the effects of the Y component.
The X wind causes the overall sound speed to be different (greater) in 1-2 direction than in 2-1 direction. The percent difference is 2*W, wherein W is $100*V_{wind}/V_{sound}$. The numeric values of the error are displayed in Fig. 4.
The Y wind has the effect of making both $D_{1-2}$ and $D_{2-1}$ slightly longer than the actual one, because the sound waves run on the hypotenuse of a right triangle . The relative error in the measurement, in this case, is

$$\varepsilon = \text{sqrt}(1+W^2)-1$$

calculated by comparing the length of the hypotenuse against that of cathetus (actual distance). The amount of the percent error is displayed in the graph of Fig. 5.
It can be seen, by comparing Fig. 5 and Fig. 6, that the longitudinal wind causes a much greater error than transversal wind.
A block diagram of an apparatus for computing distances $D_{1-2}$ and $D_{2-1}$ is sketched in Fig 5 comprising two transducers 10 and 20 located at points 1 and 2.
A start unit 11 produces a trigger signal 12 that causes transducer 10 to emit through an emitter 13 a sonic or ultrasonic pulse 14 and, at the same time, starts a counter 25 of transducer 20. Emitter 13 emits pressure pulses 14 that, after a time $t_1$, reaches transducer 20. Transducer 20 converts the pulse in an electric signal that is processed by a detector 26. The detection of the incoming pulse stops counter 25 and start unit 11 triggers a signal 21 for transducer 22. Transducer 20 through emitter 23 then emits a pressure pulse 24 that, after a time $t_2$, reaches transducer 10. Transducer 10 converts the pulse in an electrical signal that is processed by detector 16. The detection of the incoming pulse stops counter 15. At this moment the two times $t_1$ and $t_2$ are stored in counter 16 and counter 26 of transducers 10 and 20 respectively.
An average of their values is then calculated in 27 and multiplied by the speed of sound stored in 28 in order to give the correct value of the distance between points 1 and 2.
According to the invention, therefore, the compensation of the longitudinal wind between points 1 and 2 is achieved by measuring each distance twice, in two opposite directions, by transducers 10, 20 located at that points, respectively. In the invention, each transducer 10, 20 acts alternatively as a transmitter and as a receiver, so that the two paths of the acoustic pulses are the same in the two directions. After having carried out the distance measurement twice on the same path 1-2, the average of the values obtained is computed and stored as the actual distance between points 1 and 2
According to the above formulas, the effect of the longitudinal wind is completely cancelled. On the other hand, the error due to transversal wind cannot be eliminated, even if transversal wind gives an error which is usually negligible. Moreover, in the presence of wind, when the points whose distance to be calculated belong to a movable object, for example two points of a car body, the most precise measurement can me made by orienting the body so that the transversal component is minimum.
The results of the measurements are shown in Fig. 7 and Fig. 8. The first part of the graph shows the measurements in absence of wind, when only small perturbations affect the measure. At time $t_0$ a fan is switched on, substantially in the same line of the two points, causing air motion at 1m/sec in the direction from 2 to 1. At time $t_1$ the same fan is switched off. In Fig. 7 the direction of the air is mostly parallel to the distance between the points. In Fig. 8 the air moves in a direction which has also a component transversal to the distance. It is easy to see that opposite errors affect the two measurements $D_{1-2}$ and $D_{2-1}$.
In the case represented by Fig. 7 the absolute value of the errors is the same, and the average value of the distances almost completely compensates the errors. In the case of Fig. 8 only the longitudinal wind is compensated, and a negligible error still remains, due to the transversal component.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

**Claims**

1. A method for measuring a distance between at least two points using acoustic waves, **characterised in that** it comprises the steps of:

   - computing the distance ($D_{1,2}$) from the first to the second point (1,2) by generating an acoustic pulse (14) at the first point (1), measuring the time ($t_1$) taken by the acoustic pulse (14) to reach the second point (2) and comparing that time with the time ($t_0$) taken by a pulse to run on a known distance ($X_0$);
   - computing the distance ($D_{2,1}$) from the second to the first point by generating an acoustic pulse (2,1) at the second point (2), measuring the time ($t_2$) taken by the acoustic pulse (24) to reach the first point (1) and comparing that time ($t_2$) with the time ($t_0$) taken by a pulse to run on a known distance ($X_0$);
   - computing the average value of the distance ($D_{1,2}$) from the first to the second point (1,2) and of the distance ($D_{2,1}$) from the second to the first point (2,1) and assuming said average value as the actual distance

2. An apparatus for reducing the effects of a fluid motion on computing distances between two points (1,2) comprising a first and a second transducer (10,20), to be located at said points respectively (1,2), each transducer being capable of acting alternatively as a transmitter and as a receiver, each transducer comprising:

   - means for triggering (12) an acoustic pulse (14,24) starting from each transducer (10,20) when it operates as transmitter (13,23);
   - means for detecting (16,26) the acoustic pulse (24,14) coming from the other transducer (20,10);
   - means for counting (15,25) the time of flight of each acoustic pulse (14,24) from when it is triggered at one transducer to when it is detected at the other transducer (20, 10);
   - means for computing (27) the distance ($D_{1,2}$) from the first transducer to the second transducer and the distance ($D_{2,1}$) from the second transducer to the first transducer,
   - means for computing (27) an average value between the distance ($D_{1,2}$) from the first to the second transducer and the distance ($D_{2,1}$) from the second to the first transducer.

3. Apparatus according to claim 2, wherein said first and second transducer comprise a start unit (11, 12, 22) that produces a trigger signal; an emitter (13, 23) of sonic or ultrasonic pulses (14, 24), a detector (15, 25) of a sonic or ultrasonic pulse; a counter (16, 26) of the time taken by said pulse to run from one transducer to the other (10,20).

# Fig. 1

$D_{1-2}$   $D_{2-1}$

1

2

True distance

X

Y

# Fig. 2

$X_{Wind}$   $Y_{Wind}$

1

$D_{1-2}$   $D_{2-1}$

2

True distance

Wind

X

Y

Fig. 3

Fig. 4

Effect of transversal wind

W = Speed of wind/Speed of sound

Fig. 5

Effect of longitudinal wind

W = Speed of wind/Speed of sound

# Fig. 6

# Fig. 7

Distance measurement in presence of wind (1m/sec)

# Fig. 8

Distance measurement in presence of transversal wind (1m/sec)

**European Patent Office**

## EUROPEAN SEARCH REPORT

Application Number

EP 00 83 0402

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 894 810 A (JUKKALA ESKO H) 16 January 1990 (1990-01-16) * the whole document * | 1-3 | G01S11/14 G01S7/52 G01S15/74 |
| A | GB 1 285 697 A (EMI LIMITED) 16 August 1972 (1972-08-16) * page 2, line 63 - line 68 * | 1,2 | |
| A | US 4 885 725 A (MCCARTHY BRIAN D ET AL) 5 December 1989 (1989-12-05) * abstract; figure 10 * * column 6, line 28 - line 45 * | 1,2 | |
| A | PATENT ABSTRACTS OF JAPAN vol. 005, no. 110 (P-071), 17 July 1981 (1981-07-17) & JP 56 054375 A (KENSETSUSHO DOBOKU KENKYU SHOCHO;OTHERS: 01), 14 May 1981 (1981-05-14) * abstract * | 1,2 | |
| A | US 4 026 654 A (BEAURAIN PIERRE) 31 May 1977 (1977-05-31) * abstract; figure 2 * * column 6, line 36 - column 7, line 54 * | 1,2 | TECHNICAL FIELDS SEARCHED (Int.Cl.7) G01S G01F G01P |

The present search report has been drawn up for all claims

| Place of search | Date of completion of the search | Examiner |
|---|---|---|
| THE HAGUE | 2 November 2000 | Niemeijer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 83 0402

This annex lists the patent family members relating to the patent documents cited in the above-mentioned European search report
The members are as contained in the European Patent Office EDP file on
The European Patent Office is in no way liable for these particulars which are merely given for the purpose of information.

02-11-2000

| Patent document cited in search report | | Publication date | Patent family member(s) | | Publication date |
|---|---|---|---|---|---|
| US 4894810 | A | 16-01-1990 | FI | 860394 A | 29-07-1987 |
| | | | DE | 3790018 T | 27-10-1988 |
| | | | DK | 504887 A | 25-09-1987 |
| | | | WO | 8704527 A | 30-07-1987 |
| | | | GB | 2207504 A,B | 01-02-1989 |
| | | | NL | 8720014 A | 03-10-1988 |
| | | | NO | 873982 A | 23-09-1987 |
| | | | SE | 458071 B | 20-02-1989 |
| GB 1285697 | A | 16-08-1972 | NONE | | |
| US 4885725 | A | 05-12-1989 | AT | 64474 T | 15-06-1991 |
| | | | AU | 7126287 A | 09-10-1987 |
| | | | DE | 3770729 D | 18-07-1991 |
| | | | EP | 0259428 A | 16-03-1988 |
| | | | WO | 8705706 A | 24-09-1987 |
| JP 56054375 | A | 14-05-1981 | NONE | | |
| US 4026654 | A | 31-05-1977 | FR | 2209113 A | 28-06-1974 |
| | | | BE | 805630 A | 01-02-1974 |
| | | | CH | 585412 A | 28-02-1977 |
| | | | DE | 2350686 A | 18-04-1974 |
| | | | GB | 1439055 A | 09-06-1976 |
| | | | IT | 996791 B | 10-12-1975 |
| | | | JP | 1197752 C | 21-03-1984 |
| | | | JP | 49094294 A | 06-09-1974 |
| | | | JP | 58019993 B | 21-04-1983 |

EPO FORM P0459